# EUROPEAN PATENT SPECIFICATION

(11) **EP 1 481 302 B1**
(45) Date of publication and mention of the grant of the patent: **06.05.2020**
(21) Application number: 02790974.6
(22) Date of filing: 22.11.2002
(51) Int. Cl.: G05D 23/19, B01L 7/00

(54) **TEMPERATURE CONTROL METHOD AND APPARATUS FOR DRIVING POLYMERIZE CHAIN REACTION (PCR) CHIP**
TEMPERATURSTEUERVERFAHREN UND VORRICHTUNG ZUR ANSTEUERUNG EINES PCR-CHIPS (POLYMERIZE CHAIN REACTION)
PROCEDE DE COMMANDE DE LA TEMPERATURE ET APPAREIL DE PILOTAGE D'UNE PUCE PAR AMPLIFICATION EN CHAINE PAR POLYMERASE (PCR)

(30) Priority: 06.03.2002 KR 2002011874
(43) Date of publication of application: 01.12.2004
(73) Proprietor: Samsung Electronics Co., Ltd., Suwon-si, Gyeonggi-do, 443-742 (KR); Seoul National University, Seoul 151-742 (KR)
(72) Inventor: CHO, Dong-Il, Da-1004 Sinsamho Apt., 137-060 Seoul (KR); YOON, Dae-Sung, Seongnam-si, 463-010 Gyeonggi-do (KR); LEE, Young-Sun, Seongnam-si, 462-242 Gyeonggi-do (KR); YI, Dong-Hoon, 136-055 Seoul (KR); LIM, Geun-bae, Dpt of Mechanical Engineering, San 21, Hyoja-dong, Namgu, Pohang (KR)
(74) Representative: Grünecker Patent- und Rechtsanwälte PartG mbB
(86) International application number: PCT/KR2002/002194
(87) International publication number: WO 2003/075111

(56) References cited:
- WO-A1-90/05329
- JP-A- 2001 149 059
- KR-B1- 960 005 610
- US-A- 5 656 493
- US-A- 6 132 996
- US-B1- 6 261 431

## Description

### Technical Field

The present invention relates to a temperature control method and apparatus, and more particularly, to a temperature control method and apparatus for driving a polymerize chain reaction (PCR) chip.

### Background Art

A conventional apparatus for amplifying deoxyribonucleic acid (DNA) by using a PCR amplifies a PCR at the same temperature cycles by binding more than 14 small tubes having a content of 0.5 ml or 0.2 ml. The conventional apparatus has an advantage of analyzing the samples of a plurality of patients at the same time; however, it is difficult to examine various kinds of DNA at the same time because temperature conditions for maximizing the amplification of DNA are different for each DNA. In addition, the sample amount required for the experiment is at least 0.2ml which is as much as 55 times of the capacity of a chamber in a micro PCR chip according to the present invention, which is 3.6 *µ*l. Accordingly, the conventional method needs to extract a large amount from the samples of the patients. In addition, since large amounts of carcinogenic materials, which are added for the experiment, are used in the conventional apparatus, environmental contamination occurs.

Document US 6,261,431 B1 is directed to a process for microfabrication of an integrated PCR-CE device and products produced by the same. The efficiency of amplification in glass PCR-CE chips was further evaluated by cycling PCR reactions in a chip containing no heater or thermocouple components.

Document US 6,132,996 is directed towards a thermocycling apparatus and method. The apparatus is mounted on a single module board and includes eight heating unit assemblies. Each heating unit assembly contains at least two heating elements defining two heating chambers. Each heating chamber has a temperature feedback system. The temperature feedback system includes temperature sensors, a multiplexer, and an analog-to-digital (A/D) converter.

### Disclosure of the Invention

The invention is described in the claims. The embodiments which do not fall within the scope of the claims are to be interpreted as examples useful for understanding the invention. The invention provides a temperature control apparatus for a polymerize chain reaction chip according to claim 1. The invention further provides a temperature control method for a plurality of PCR chips according to claim 4. Preferred embodiments are described in the dependent claims.

### Brief Description of the Drawings

FIG. 1 is a functional block diagram illustrating a temperature control apparatus for a polymerize chain reaction (PCR) chip according to an embodiment of the present invention.
FIG. 2 is a functional block diagram illustrating a PCR chip according to another embodiment of the present invention.
FIG. 3 is a flowchart for explaining a temperature control method for a PCR chip according to still another embodiment of the present invention.
FIG. 4 is a diagram illustrating a hardware configuration of a temperature control apparatus of a PCR chip of FIG. 1 according to yet another embodiment of the present invention.
FIG. 5 is a diagram illustrating a hardware configuration of a PCR chip of FIG. 2 according to further another embodiment of the present invention.
FIG. 6 illustrates a waveform of a platinum sensor voltage measured at an analog/digital (A/D) converter input terminal by using an oscilloscope according to still further embodiment of the present invention, in which the temperature of a predetermined PCR chip is controlled by using a PCR chip according to the present invention.
FIG. 7 illustrates the waveform of a voltage in a platinum sensor obtained from a CPU according to the embodiment of FIG. 5.
FIG. 8 illustrates the overshoot of a platinum heater temperature according to the embodiment of FIG. 5.
FIG. 9 illustrates a normal state error of a platinum heater temperature according to the embodiment of FIG. 5.
FIG. 10 illustrates an amplified deoxyribonucleic acid (DNA) fluorescent image according to the embodiment of FIG. 5.

### Best mode for carrying out the Invention

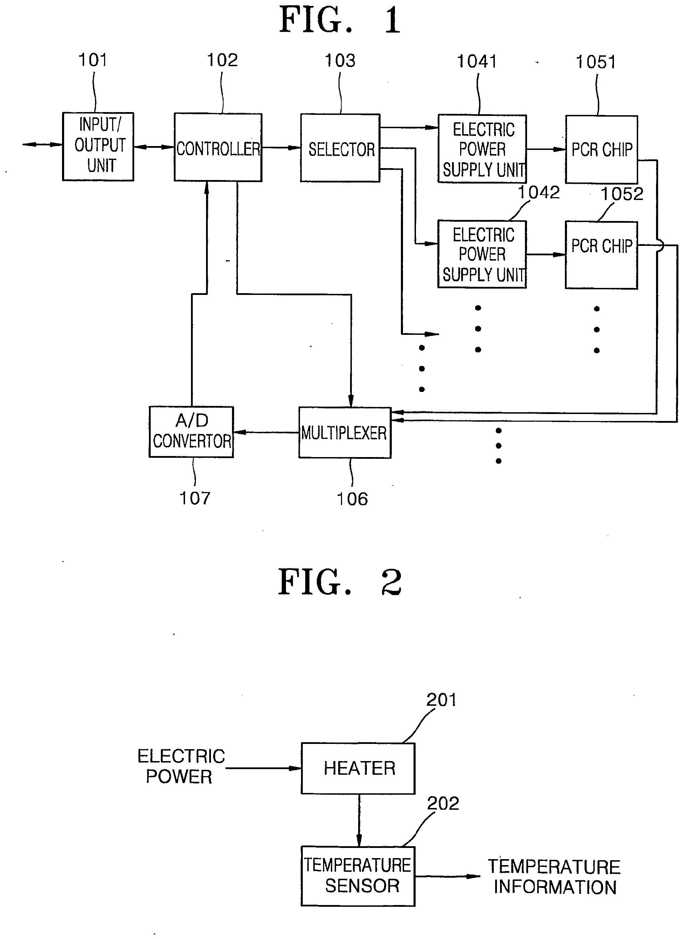

FIG. 1 is a functional block diagram illustrating a temperature control apparatus for a polymerize chain reaction (PCR) according to an embodiment of the present invention. An input/output (I/O) unit 101 receives selection information, control temperature and time information for selecting a PCR chip to be controlled at a predetermined temperature for a predetermined time from the outside, and supplies the information to a controller 102. In addition, the I/O unit 101 receives the control result information of the PCR chip, i.e., actual temperature information on the PCR chip, from the controller 102, and provides the control result information on the PCR chip, i.e., actual temperature information on the PCR chip, to a user.

The controller 102 generates a control signal based on the selection information, the control temperature and time information from the I/O unit 101, and collects the actual temperature information on the PCR chip to be controlled in order to supply the information to the I/O unit 101. In addition, the controller 102 generates a selection signal for selecting a predetermined PCR chip, whose temperature will be read out in order, to provide the selection signal to a multiplexer 106

A selector 103 selects an electric power supply unit 1041, or 1042, ... that provides electric power to the PCR chip to be controlled, according to the control signal from the controller 102, and provides the control signal to the selected electric power supply unit 1041, or 1042, ....

The electric power supply units 1041, 1042, ... respectively supply electric power to predetermined PCR chips 1051 1052, ..., which are respectively connected to the electric power supply units 1041, 1042, ..., based on the control signal from the selector 103.

The PCR chips 1051, 1052, ... respectively receive electric power from the electric power supply units 1041, 1042, ... and generate heat by using the electric power, thereby controlling the chip temperature. The PCR chips 1051, 1052, ... respectively measure their own temperatures and respectively supply the temperature values to the multiplexer 106.

The multiplexer 106 receives actual temperature information on the PCR chips 1051, 1052, ... from the PCR chips 1051, 1052, ..., and receives the selection signal for selecting one PCR chip from the controller 102 in order to provide the actual temperature information on the PCR chip selected by the selection signal to an analog/digital (A/D) conversion unit 107.

The A/D converter 107 receives the actual temperature information on the PCR chip selected by the selection information from the multiplexer 106 in order to convert the actual temperature information into a digital signal, and supply the digital signal to the controller 102.

FIG. 2 is a functional block diagram illustrating a PCR chip according to one embodiment of the present invention.

A heater 201 receives electric power from the outside to generate heat.

A temperature sensor 202 measures the actual temperature of the heater 201 and outputs the temperature to the outside.

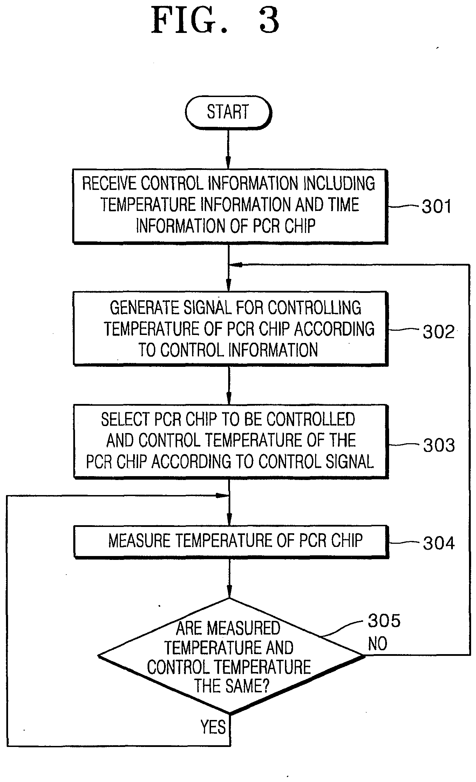

FIG. 3 is a flowchart for explaining a temperature control method for a PCR chip according to one embodiment of the present invention. Control information, including temperature information and time information on a PCR chip, is input in step 301 in order to generate a control signal for controlling the temperature of the PCR chip according to the control information in step 302. Thereafter, the PCR chip to be controlled is selected by the control signal to control the temperature of the PCR chip in step 303. Next, the actual temperature of the PCR chip is measured in step 304 in order to compare the measured temperature with the control temperature in step 305. When the temperatures are the same, the method proceeds to step 304. When the temperatures are different, the method proceeds to step 302.

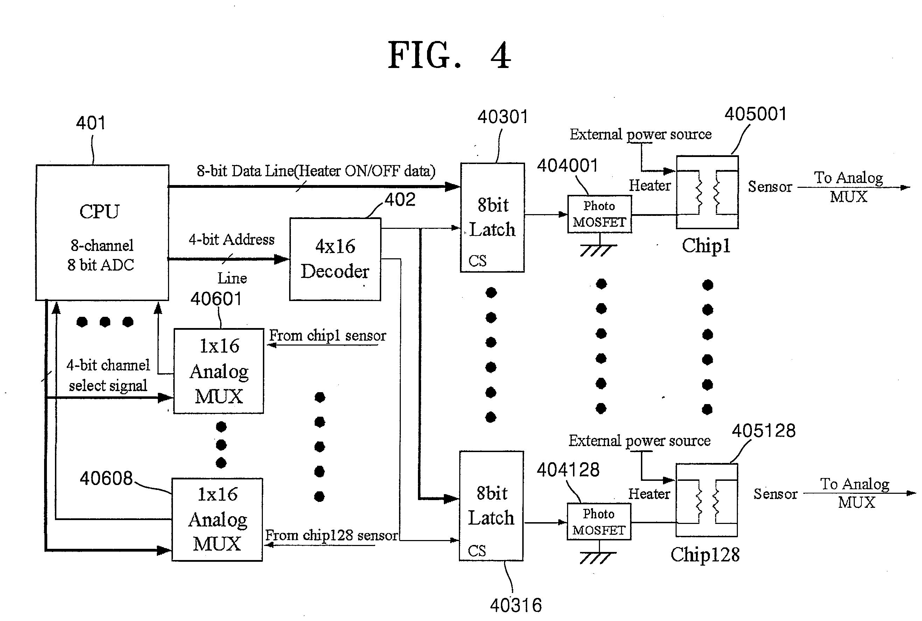

FIG. 4 is a diagram illustrating a hardware configuration of temperature control apparatus of a PCR chip of FIG. 1 according to one embodiment of the present invention. In the present invention, 128 CPR chips are used. When a constant current is applied to platinum sensors of the PCR chips, different voltages are generated at the both ends of the platinum sensors according to the temperatures of the PCR chips. The different voltages are processed and transferred to a CPU. The CPU converts the analog voltage information into digital information and compares the measured temperature of the PCR chip with a target temperature. If the measured temperature is higher than the target temperature, a heater included in the chip is turned off. In other case, the heater included in the chip is turned on.

More specifically, a CPU 401 corresponds to the controller 101 of FIG. 1. In other words, the CPU 401 generates a control signal for controlling the temperature of a PCR chip to be controlled based on predetermined control temperature and time and information on the PCR chip. In the present invention, the control signal includes heater on/off signals supplied to photo MOSFETs 404001, 104002, ... corresponding to the electric power supply units 1041, 1042, ... of FIG. 1, and 4-bit address signals for selecting the PCR chip. The heater on/off signals are supplied to 8-bit latches 40301, ..., 10316, and the 4-bit address signals are supplied to the 8-bit latches 40301, ..., 40316 through a decoder 402. Accordingly, the decoder 402 and the 8-bit latches 40301, ..., 40316 correspond to the selector 103 of FIG. 1.

The latches 40301, ..., 40316 select the PCR chip to be controlled by using the 4-bit address signals, and supply the heater on/off signal to the photo MOSFET 404001, ..., 404128 that supplies electric power to the PCR chip to be controlled. The Photo MOSFET 404001, ..., 404128 respectively supply electric power to the PCR chips 405001, ..., 405128 according to the heater on/off signal, and the PCR chips 405001, ..., 405128 respectively generate heat by using the supplied electric power. In addition, actual temperature information on the PCR chips is generated and respectively supplied to analog multiplexer 40601, ..., 40608.

The analog multiplexer 40601, ..., 40608 receive the selection signal for selecting the PCR chip, whose temperature will be read out, from the CPU 401 and receive the actual temperature information on the PCR chip to provide the actual temperature signal of the selected PCR chip to the CPU 401.

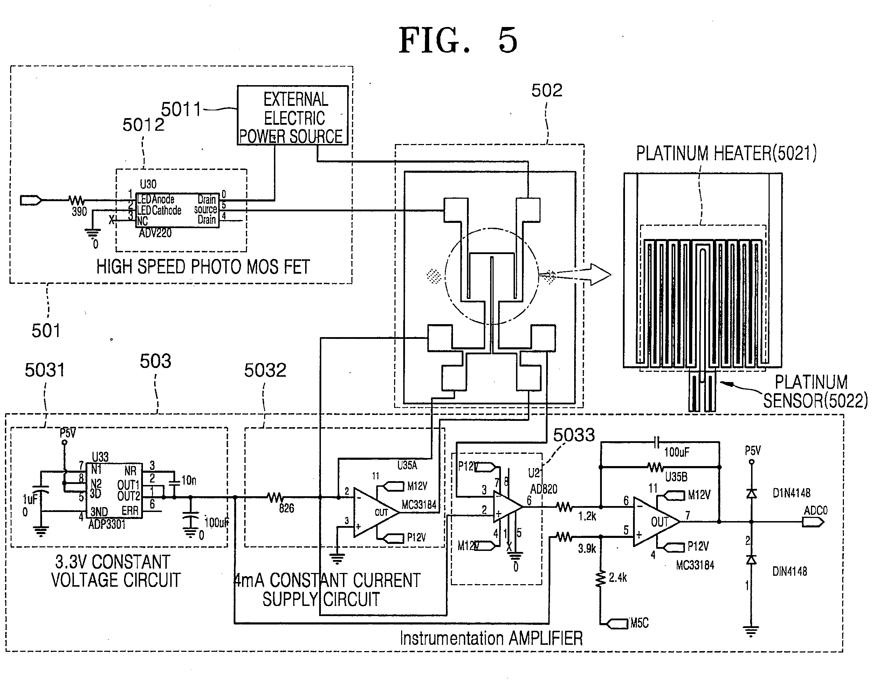

FIG. 5 is a diagram illustrating a hardware configuration of a PCR chip of FIG. 2 according to another embodiment of the present invention. Here, a PCR chip is formed of a platinum heater and a platinum sensor. In order to generate a fine constant current for measurement, a regulator ADP3301 having an output voltage error of 0.8 % and a high performance op-amp MC33184 are used to generate a constant current of 4 mA, and the constant current is supplied to the platinum sensor. Here, a four-point probe method is used to measure the voltages generated in the platinum sensor. In this case, the voltages at the both ends of the platinum sensor are measured by using an instrumentation amplifier. In addition, a DC offset and an amplification rate of the voltages are controlled at an end circuit, and then, the voltages are supplied to analog multiplexers through an over voltage limiter formed of two diodes. A CPU recognizes the temperature of the PCR chip based on the supplied information and generates a control command by comparing the temperature of the PCR chip with the target temperature. In addition, the CPU switches an external electric power supplied to a heater by using a high-speed photo MOSFET, instead of a relay, to control the temperature of the PCR chip.

More specifically, an electric power supply unit 501 is formed of an external electric power source 5011 and a photo MOSFET 5012 that receives an on or off signal from the outside to turn on or off the external electric power source 5011 and the electric power supplied to a platinum heater 5021.

Reference numeral 502 denotes a device is formed of a platinum heater 5021 and a platinum sensor 5022. Here, the platinum heater 5021 converts the electric power supplied from the external electric power source 5011 into heat. The platinum sensor 5022 receives constant voltage and constant current to generate a voltage corresponding to the temperature of the platinum heater 5021 and outputs the temperature to the outside.

Reference numeral 503 denotes a circuit that supplies the constant voltage and constant current to the platinum sensor 5022, and measures the temperature of the platinum heater 5021 by comparing the output voltage of the platinum sensor 5022 corresponding to the temperature of the platinum heater 5021 with the input voltage, i.e., the constant voltage. Here, reference numeral 5031 denotes a regulator ADP3301 as a constant voltage circuit, reference numeral 5032 denotes op-amp MC33184 as a constant current circuit, and reference numeral 5033 denotes an amplifier for amplifying a difference between an input voltage and an output voltage. The actual temperature information on the platinum heater 5021, which is measured in the circuit 503, is output to an analog multiplexer.

A PCR experiment using a temperature control apparatus for a PCR chip according to the above embodiment of the present invention will now be described. Here, plasmid deoxyribonucleic acid (DNA) is used as an amplifying sample, and a driving solution is formed by adding a buffering solution including primer, dNDP, salt, and DNA polymerize enzyme to a start sample. After filling a reaction chamber by flowing the driving solution into an inlet of a PCR chip, the inlet and outlet of the reaction chamber are sealed by using fine block and epoxy. The thermostatic control apparatus establishes temperature sections of 55°C, 72°C, and 95°C and a maintenance time for 30 seconds, respectively.

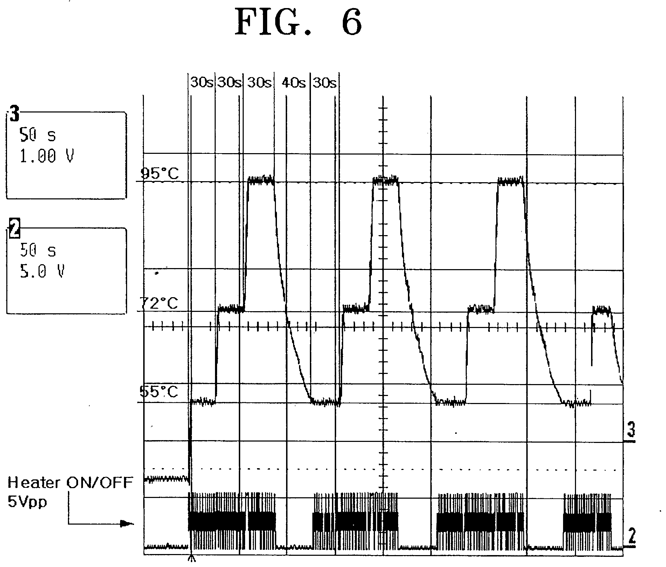

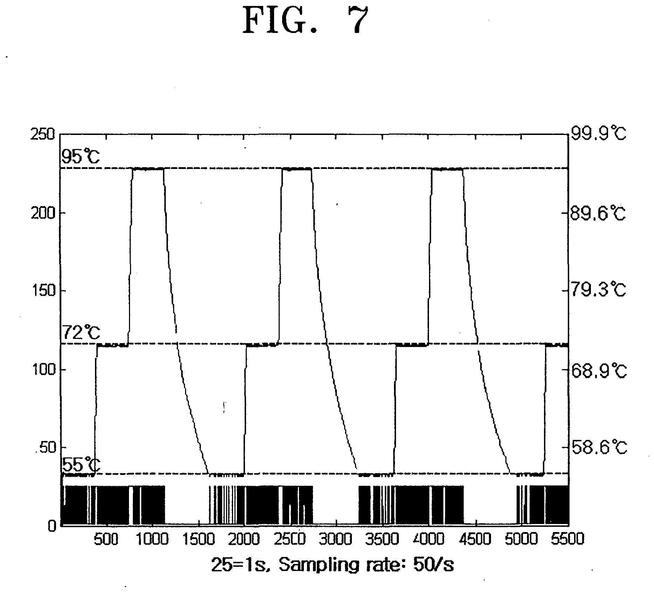

FIG. 6 illustrates a waveform of platinum sensor voltage measured at an A/D converter input terminal by using an oscilloscope according to still another embodiment of the present invention, and FIG. 7 illustrates a waveform of a voltage in a platinum sensor obtained from a CPU according to yet another embodiment of the present invention. As shown in FIGS. 6 and 7, the CPU truly recognizes the output values of the platinum sensor.

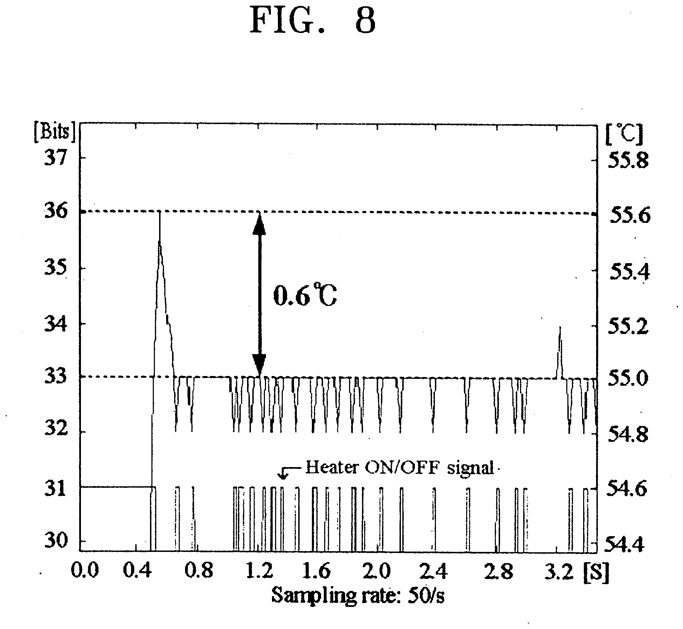

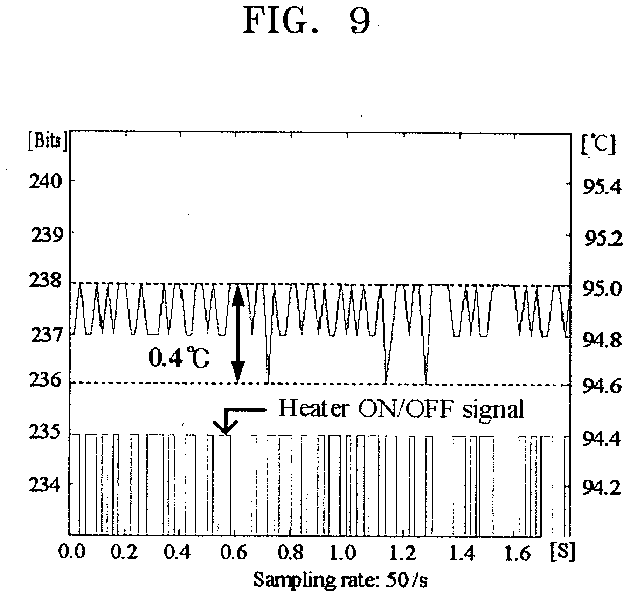

FIG. 8 illustrates the overshoot of a platinum heater temperature according to still yet another embodiment of the present invention, and FIG. 9 illustrates a normal state error of a platinum heater temperature according to further another embodiment of the present invention. As shown in FIGS. 8 and 9, a temperature control apparatus according to the present invention can control a micro PCR chip while having a normal state error of plus or minus 0.4°C, an overshoot of less than 0.6°C, and an increasing speed of 6.8°C/sec. The above temperature control apparatus according to the present invention has a performance as good as the performance of a conventional product that amplifies a PCR by using tubes of 0.2ml.

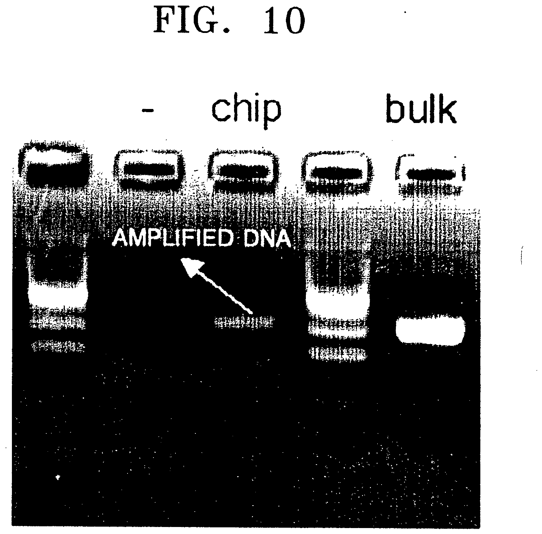

FIG. 10 illustrates an amplified DNA fluorescent image according to still further another embodiment of the present invention. Here, clear amplified DNA bands are represented in the image of FIG. 10.

The embodiments of the present invention can be embedded as computer programs that can be operated in a computer so that the embodiment of the present invention can be realized in a digital computer that operates the program by using a recording medium used in the computer.

The recording medium used in the computer includes magnetic recording media, for example, ROM, floppy disks, and hard disks, optical recording media, for example, CD-ROM and DVD, and carrier wave, for example, transfer through the Internet.

While this invention has been particularly shown and described with reference to preferred embodiments thereof, the preferred embodiments described above are merely illustrative and are not intended to limit the scope of the invention. It will be understood by those skilled in the art that various changes in form and details may be made therein without departing from the scope of the invention as defined by the appended claims .

### Industrial Applicability

As a result, a plurality of DNA samples are simultaneously examined under different temperature conditions so that examination and analysis times can be reduced. In addition, only small amounts of samples are required for the examination, burden on patients can be reduced while reducing environmental contamination.

In addition, a temperature control apparatus according to the present invention controls the temperature of a fine PCR chip so that the temperature is rapidly increased and decreased. In addition, the temperature of a reaction chamber can be precisely measured in a short time by using a platinum sensor attached under the chamber of the PCR chip, so that the temperature of the PCR chip can be precisely controlled.

## Claims

1. A temperature control apparatus for a polymerize chain reaction, PCR, chip, the temperature control apparatus comprising:
PCR chips (1051, 1052) for receiving electric power from the outside and generating heat to maintain a predetermined temperature and for outputting actual temperature information to the outside;
electric power supply units (1041, 1042) for supplying electric power to the PCR chips according to input control signals;
a controller (102) for generating the control signals based on control information including pre-established control temperature and control time information and the actual temperature information supplied from the PCR chips in order to supply the control signals to the electric power supply units;
a selector (103) for receiving a first selection signal for selecting the PCR chip to be controlled and the control signal from the controller, in order to select the electric power supply unit for supplying the electric power to the PCR chip to be controlled and supply the control signal to the selected electric power supply unit, wherein the first selection signal is an address signal for selecting the PCR chip, and wherein the selector comprises a decoder (402) and latches (40301, ..., 40316), wherein the decoder is configured for supplying the address signal to the latches; and
a multiplexer (106) for receiving a second selection signal for selecting one of the PCR chips from the controller and supplying the actual temperature information on a predetermined PCR chip to the controller according to the second selection signal.

2. The temperature control apparatus of claim 1, wherein one PCR chip includes:
a heater (201) for receiving electric power from the electric power supply unit to generate heat; and
a temperature sensor (202) for measuring the temperature of the PCR chip and outputting the temperature to the outside.

3. The temperature control apparatus of claim 1, further comprising:
an input/output, I/O, unit (101) for receiving control information including the control temperature and time information from a user, in order to supply the control information to the controller and outputting the control result of the temperature of a predetermined PCR chip to the outside according to the control information.

4. A temperature control method for a plurality of polymerize chain reaction, PCR, chips, the method comprising:
(a) receiving, by the PCR chips (1051, 1052), electric power from outside and generating heat to maintain a predetermined temperature and outputting actual temperature information to the outside;
(b) supplying, by electric power supply units (1041, 1042), electric power to the PCR chips according to input control signals;
(c) generating, by a controller (102), the control signals based on control information including pre-established control temperature and control time information and the actual temperature information supplied from the PCR chips in order to supply the control signals to the electric power supply units, generating a first selection signal and a second selection signal;
(d) receiving, by a selector (103), the first selection signal for selecting the PCR chip to be controlled and the control signal from the controller, in order to select the electric power supply unit for supplying the electric power to the PCR chip to be controlled and supply the control signal to the selected electric power supply unit, wherein the selection signal is an address signal for selecting the PCR chip, and supplying, by a decoder (402) of the selector, the address signal to latches (40301, ..., 40316) of the selector; and
(e) receiving, by a multiplexer (106), the second selection signal for selecting one of the PCR chips from the controller and supplying the actual temperature information on a predetermined PCR chip to the controller according to the second selection signal.

5. The temperature control method of claim 4, further comprising:
(f) measuring (304) the temperature of the PCR chip; and
(g) repeating (c) when the actual temperature and the control temperature of the PCR chip are different.

6. The temperature control method of claim 4, wherein (g) includes:
(g1) generating information for selecting a predetermined PCR chip when a plurality of PCR chips are arranged; and
(g2) subsequently comparing the actual temperature of the selected PCR chip with the control temperature corresponding to the selected PCR chip to perform (c) when the actual temperature and control temperature are different.

7. A recording medium readable in a computer, wherein a program for operating the method of the claim 4 is recorded.

8. A recording medium readable in a computer, wherein a program for operating the method of the claim 5 is recorded.

9. A recording medium readable in a computer, wherein a program for operating the method of the claim 6 is recorded.

## Patentansprüche

1. Temperatursteuervorrichtung für einen Polymerasekettenreaktions-, PCR, Chip, wobei die Temperatursteuervorrichtung umfasst:
PCR-Chips (1051, 1052) zum Aufnehmen von elektrischem Strom von außen und Erzeugen von Wärme, um eine vorgegebene Temperatur zu halten, und zum Ausgeben von Informationen über die aktuelle Temperatur nach außen;
elektrische Stromversorgungseinheiten (1041, 1042) zum Leiten von elektrischem Strom zu den PCR-Chips entsprechend Eingangssteuersignalen;
eine Steuerung (102) zum Erzeugen der Steuersignale basierend auf Steuerinformationen einschließlich einer vorab festgelegten Steuertemperatur und auf Steuerzeitinformationen und den Informationen über die aktuelle Temperatur, die von den PCR-Chips geliefert werden, um die Steuersignale zu den elektrischen Stromversorgungseinheiten zu leiten;
einen Selektor (103) zum Empfangen eines ersten Auswahlsignals zum Auswählen des PCR-Chips, der gesteuert werden soll, und des Steuersignals von der Steuerung, um die elektrische Stromversorgungseinheit zum Leiten des elektrischen Stroms zu dem PCR-Chip, der gesteuert werden soll, auszuwählen und das Steuersignal zu der ausgewählten elektrischen Stromversorgungseinheit zu leiten, wobei das erste Auswahlsignal ein Adressensignal zum Auswählen des PCR-Chips ist, und wobei der Selektor einen Decoder (402) und Auffangspeicher (40301,..., 40316) umfasst, wobei der Decoder dazu konfiguriert ist, das Adressensignal zu den Auffangspeichern zu leiten; und
einen Multiplexer (106) zum Empfangen eines zweiten Auswahlsignals zum Auswählen von einem der PCR-Chips von der Steuerung und zum Leiten der Informationen über die aktuelle Temperatur an einem vorgegebenen PCR-Chip zu der Steuerung entsprechend dem zweiten Auswahlsignal.

2. Temperatursteuervorrichtung nach Anspruch 1, wobei ein PCR-Chip beinhaltet:
eine Heizung (201) zum Empfangen von elektrischem Strom von der elektrischen Stromversorgungseinheit, um Wärme zu erzeugen; und
einen Temperatursensor (202) zum Messen der Temperatur des PCR-Chips und zum Ausgeben der Temperatur nach außen.

3. Temperatursteuervorrichtung nach Anspruch 1, des Weiteren umfassend:
eine Eingabe/Ausgabe-, I/O, Einheit (101) zum Empfangen von Steuerinformationen einschließlich der Steuertemperatur und Zeitinformationen von einem Benutzer, um die Steuerinformationen an die Steuerung zu leiten und zum Ausgeben des Steuerergebnisses der Temperatur eines vorgegebenen PCR-Chips nach außen entsprechend den Steuerinformationen.

4. Temperatursteuerverfahren für eine Vielzahl von Polymerasekettenreaktions-, PCR, Chips, wobei das Verfahren umfasst:
(a) Aufnehmen, durch die PCR-Chips (1051, 1052), von elektrischem Strom von außen und Erzeugen von Wärme, um eine vorgegebene Temperatur zu halten, und Ausgeben von Informationen über die aktuelle Temperatur nach außen;
(b) Leiten, durch elektrische Stromversorgungseinheiten (1041, 1042), von elektrischem Strom zu den PCR-Chips entsprechend Eingangssteuersignalen;
(c) Erzeugen, durch eine Steuerung (102), der Steuersignale basierend auf Steuerinformationen einschließlich einer vorab festgelegten Steuertemperatur und auf Steuerzeitinformationen und den Informationen über die aktuelle Temperatur, die von den PCR-Chips geliefert werden, um die Steuersignale zu den elektrischen Stromversorgungseinheiten zu leiten, Erzeugen eines ersten Auswahlsignals und eines zweiten Auswahlsignals;
(d) Empfangen, durch einen Selektor (103), des ersten Auswahlsignals zum Auswählen des PCR-Chips, der gesteuert werden soll, und des Steuersignals von der Steuerung, um die elektrische Stromversorgungseinheit zum Leiten des elektrischen Stroms zu dem PCR-Chip, der gesteuert werden soll, auszuwählen und das Steuersignal zu der ausgewählten elektrischen Stromversorgungseinheit zu leiten, wobei das Auswahlsignal ein Adressensignal zum Auswählen des PCR-Chips ist, und Leiten, durch einen Decoder (402) des Selektors, des Adressensignals an Auffangspeicher (40301,..., 40316) des Selektors; und
(e) Empfangen, durch einen Multiplexer (106), des zweiten Auswahlsignals zum Auswählen von einem der PCR-Chips von der Steuerung und zum Leiten der Informationen über die aktuelle Temperatur an einem vorgegebenen PCR-Chip zu der Steuerung entsprechend dem zweiten Auswahlsignal.

5. Temperatursteuerverfahren nach Anspruch 4, des Weiteren umfassend:
(f) Messen (304) der Temperatur des PCR-Chips; und
(g) Wiederholen von (c), wenn die tatsächliche Temperatur und die Steuertemperatur des PCR-Chips unterschiedlich sind.

6. Temperatursteuerverfahren nach Anspruch 4, wobei (g) beinhaltet:
(g1) Erzeugen von Informationen zum Auswählen eines vorgegebenen PCR-Chips, wenn eine Vielzahl von PCR-Chips angeordnet sind; und
(g2) anschließendes Vergleichen der tatsächlichen Temperatur des ausgewählten PCR-Chips mit der Steuertemperatur, die mit dem ausgewählten PCR-Chip korrespondiert, um (c) durchzuführen, wenn die tatsächliche Temperatur und die Steuertemperatur unterschiedlich sind.

7. Aufzeichnungsmedium, das in einem Computer lesbar ist, wobei ein Programm zum Durchführen des Verfahrens nach Anspruch 4 aufgezeichnet ist.

8. Aufzeichnungsmedium, das in einem Computer lesbar ist, wobei ein Programm zum Durchführen des Verfahrens nach Anspruch 5 aufgezeichnet ist.

9. Aufzeichnungsmedium, das in einem Computer lesbar ist, wobei ein Programm zum Durchführen des Verfahrens nach Anspruch 6 aufgezeichnet ist.

## Revendications

1. Appareil de commande de la température pour une puce de réaction en chaîne de polymérisation, PCR, l'appareil de commande de la température comprenant:
des puces PCR (1051, 1052) pour recevoir de l'énergie électrique de l'extérieur et générer de la chaleur afin de maintenir une température prédéterminée et pour délivrer des informations de température réelle à l'extérieur;
des unités d'alimentation électrique (1041, 1042) pour fournir de l'énergie électrique aux puces PCR en fonction de signaux de commande d'entrée;
un dispositif de commande (102) pour générer les signaux de commande sur la base d'informations de commande comprenant des informations de température et de temps de commande préétablies et les informations de température réelle fournies par les puces PCR afin de fournir les signaux de commande aux unités d'alimentation électrique;
un sélecteur (103) pour recevoir un premier signal de sélection pour sélectionner la puce PCR à commander et le signal de commande provenant du dispositif de commande, afin de sélectionner l'unité d'alimentation électrique pour fournir l'énergie électrique à la puce PCR à commander et fournir le signal de commande à l'unité d'alimentation électrique sélectionnée, dans lequel le premier signal de sélection est un signal d'adresse pour sélectionner la puce PCR, et dans lequel le sélecteur comprend un décodeur (402) et des loquets (40301 40316), dans lequel le décodeur est configuré pour la fourniture du signal d'adresse aux verrous; et
un multiplexeur (106) pour recevoir un deuxième signal de sélection pour sélectionner une des puces PCR du dispositif de commande et fournir l'information de température réelle sur une puce PCR prédéterminée au dispositif de commande en fonction du deuxième signal de sélection.

2. Appareil de commande de température selon la revendication 1, dans lequel une puce PCR comprend:
un dispositif de chauffage (201) pour recevoir de l'énergie électrique de l'unité d'alimentation électrique afin de générer de la chaleur; et
un capteur de température (202) permettant de mesurer la température de la puce PCR et d'en sortir la température vers l'extérieur.

3. Appareil de commande de la température selon la revendication 1, comprenant en outre:
une unité d'entrée/sortie, E/S, (101) pour recevoir des informations de commande, y compris les informations de température et de temps de commande d'un utilisateur, afin de fournir les informations de commande au dispositif de commande et de sortir le résultat de commande de la température d'une puce PCR prédéterminée vers l'extérieur selon les informations de commande.

4. Procédé de commande de la température pour une pluralité de puces de réaction en chaîne de polymérisation, PCR, le procédé comprenant:
(a) la réception, par les puces PCR (1051, 1052), d'énergie électrique provenant de l'extérieur et la génération de chaleur pour maintenir une température prédéterminée et l'émission d'une information de température réelle vers l'extérieur;
(b) la fourniture, par des unités d'alimentation électrique (1041, 1042), d'énergie électrique aux puces PCR en fonction de signaux de commande d'entrée;
(c) la génération, par un dispositif de commande (102), des signaux de commande sur la base d'informations de commande comprenant des informations de température et de temps de commande préétablies et les informations de température réelle fournies par les puces PCR afin de fournir les signaux de commande aux unités d'alimentation électrique, en générant un premier signal de sélection et un deuxième signal de sélection;
(d) la réception, par un sélecteur (103), du premier signal de sélection pour sélectionner la puce de PCR à commander et le signal de commande provenant du dispositif de commande, afin de sélectionner l'unité d'alimentation électrique pour fournir l'énergie électrique à la puce de PCR à commander et fournir le signal de commande à l'unité d'alimentation électrique sélectionnée, dans lequel le signal de sélection est un signal d'adresse pour sélectionner la puce de PCR, et fournir, par un décodeur (402) du sélecteur, le signal d'adresse aux verrous (40301, ..., 40316) du sélecteur; et
(e) la réception, par un multiplexeur (106), du deuxième signal de sélection pour sélectionner l'une des puces PCR du dispositif de commande et fournir au dispositif de commande l'information de température réelle sur une puce PCR prédéterminée en fonction du deuxième signal de sélection.

5. Procédé de commande de la température selon la revendication 4, comprenant en outre:
(f) la mesure (304) de la température de la puce PCR ; et
(g) la répétition du point (c) lorsque la température réelle et la température de commande de la puce PCR sont différentes.

6. Procédé de commande de la température selon la revendication 4, dans laquelle (g) comprend:
(g1) la génération d'informations pour sélectionner une puce PCR prédéterminée lorsqu'une pluralité de puces PCR sont disposées; et
(g2) puis la comparaison de la température réelle de la puce PCR sélectionnée avec la température de commande correspondant à la puce PCR sélectionnée pour effectuer (c) lorsque la température réelle et la température de commande sont différentes.

7. Support d'enregistrement lisible dans un ordinateur, dans lequel est enregistré un programme pour le fonctionnement de la méthode de la revendication 4.

8. Support d'enregistrement lisible dans un ordinateur, dans lequel un programme pour faire fonctionner la méthode de la revendication 5 est enregistré.

9. Support d'enregistrement lisible par ordinateur, sur lequel est enregistré un programme permettant de mettre en oeuvre la méthode de la revendication 6.
